# DEMANDE DE BREVET EUROPEEN

(11) **EP 1 883 257 A1**
(43) Date de publication de la demande: **30.01.2008**
(21) Numéro de dépôt: 06291232.4
(22) Date de dépôt: 28.07.2006
(51) Int. Cl.: H04Q 7/32, G06F 17/30

(54) **Procédé de synchronisation entre un equipement mobile et une carte a puce**

(71) Demandeur: GEMPLUS, 13420 Gémenos (FR)
(72) Inventeur: Martin, Christophe, 13600 Ceyreste (FR); Jutard, Laurent, 13190 Allauch (FR); Chretien, Stéphane, 83330 Le Beausset (FR)

(57) **Abrégé**

L'invention se rapport à un procédé pour synchroniser des données personnelles entre une mémoire (11) d'au moins un équipement mobile (9, 9a) et un dispositif externe (12), chacun desdits au moins un équipement mobile (9,9a) comprenant ou étant connecté à un client de synchronisation SyncML (16), ledit dispositif externe comprenant un serveur de synchronisation SyncML (14) associé audit client de synchronisation SyncML, **caractérisé en ce que** ledit dispositif externe (12) est une carte à puce (12), et en ce que ledit procédé comprend des étapes dans lesquelles
- ladite carte à puce (12) est associée audit équipement mobile;
- ledit client de synchronisation SyncML (16) émet (24) une requête de synchronisation à destination dudit serveur de synchronisation SyncML (14);
- ledit serveur de synchronisation SyncML synchronise (26) lesdites données personnelles entre ladite carte à puce et ledit équipement mobile.

## Description

L'invention se rapporte à un procédé pour synchroniser des données personnelles entre une mémoire d'au moins un équipement mobile et un dispositif externe, chacun desdits au moins un équipement mobile comprenant ou étant connecté à un client de synchronisation SyncML, ledit dispositif externe comprenant un serveur de synchronisation SyncML associé audit client de synchronisation SyncML.

L'invention se rapporte également à une carte à puce.

L'invention se rapporte également à un ensemble comprenant un équipement mobile et une carte à puce, ledit équipement mobile comprenant ou étant connecté à un client de synchronisation SyncML, ladite carte à puce étant associée audit équipement mobile.

Le protocole SyncML est un standard permettant la synchronisation de données personnelles de tout type, et notamment des contacts ou des agendas. Ce standard est notamment défini dans la publication « SyncML Specification » accessible sur le site de l'Open Mobile Alliance, http://www.openmobilealliance.org/tech/affiliates/syncml/syncmlindex.html

Au sens de la présente demande, un client de synchronisation SyncML est un client émettant des requêtes vers un serveur conformément au protocole défini par le standard SyncML et un serveur de synchronisation SyncML est un serveur répondant à des requêtes d'un client conformément au protocole défini par le standard SyncML.

De tels procédés sont connus pour synchroniser des données d'un équipement mobile comprenant un client de synchronisation SyncML avec un serveur de synchronisation SyncML situé dans un terminal fixe, par exemple de type PC, acronyme anglais pour « Personal Computer ». Lorsqu'un tel serveur de synchronisation SyncML est situé dans le terminal fixe, une synchronisation des données peut être réalisée entre l'équipement mobile et le terminal fixe, de sorte à assurer que les données de l'équipement mobile sont bien les mêmes que celles du terminal fixe. On comprend que cette synchronisation est particulièrement importante lorsque les données sont des données de contacts personnels dans lesquelles des modifications fréquentes peuvent intervenir.

Toutefois, de tels procédés ont l'inconvénient de nécessiter l'utilisation d'un terminal fixe, souvent temporairement dédié à cet usage et donc d'une infrastructure connectée, chère, lourde, incompatible avec les besoins de mobilité actuels. Le dispositif externe comprenant le serveur de synchronisation SyncML est donc trop lourd pour que la gestion des données de l'équipement mobile puisse être efficace.

L'invention vise notamment à pallier ces inconvénients.

Par ailleurs, dans une architecture comprenant un équipement mobile et une carte à puce, par exemple un téléphone mobile comprenant une carte UICC, acronyme pour « Universal Integrated Circuit Card » en langue anglaise, munie d'une application SIM, acronyme anglais pour « Subscriber Identity Module », ou USIM, acronyme anglais pour « Universal Subscriber Identity Module », ou encore RUIM, acronyme anglais pour « Removable User Identity Module », les données personnelles comprises dans la mémoire du téléphone ne sont pas synchronisées avec les données de la carte. Ainsi, avec les équipements existants, si un utilisateur perd son téléphone sans perdre sa carte SIM, ou bien si le téléphone est endommagé sans endommagement de la carte SIM, il est impossible de récupérer les contacts compris en mémoire du téléphone perdu ou endommagés lorsque la carte SIM est insérée dans un nouveau téléphone. La portabilité des données personnelles n'est donc pas assurée par les procédés et équipements actuels.

L'invention vise également à pallier ces inconvénients.

Il a également été proposé d'installer dans les cartes UICC précitées, des applications permettant de réaliser des fonctionnalités de synchronisation. Toutefois, de telles applications nécessitent une modification de l'équipement mobile pour adapter ou installer coté mobile une application de synchronisation associée à l'application de synchronisation de la carte, et ce lors de chaque changement de mobile lorsque le mobile ne gérait pas les synchronisations auparavant.

L'invention vise également à pallier cet inconvénient.

Un premier but de l'invention est donc d'améliorer les procédés de synchronisation existant concernant les données d'un équipement mobile.

Un autre but de l'invention est d'assurer la portabilité des données liées à un équipement mobile, même si cet équipement mobile est perdu ou endommagé.

Un autre but de l'invention est d'assurer cette portabilité sans utiliser d'infrastructures lourdes ou coûteuses.

Un autre but de l'invention est d'utiliser avantageusement les fonctionnalités de client de synchronisation existant dans un équipement mobile.

Au moins un de ces buts est atteint selon l'invention qui concerne un procédé pour synchroniser des données personnelles entre une mémoire d'au moins un équipement mobile et un dispositif externe, chacun desdits au moins un équipement mobile comprenant ou étant connecté à un client de synchronisation SyncML, ledit dispositif externe comprenant un serveur de synchronisation SyncML associé audit client de synchronisation SyncML, caractérisé en ce que ledit dispositif externe est une carte à puce, et en ce que ledit procédé comprend des étapes dans lesquelles
- ladite carte à puce est associée audit équipement mobile;
- ledit client de synchronisation SyncML émet une requête de synchronisation à destination dudit serveur de synchronisation SyncML ;
- ledit serveur de synchronisation SyncML synchronise lesdites données personnelles entre ladite carte à puce et ledit équipement mobile.

Selon l'invention, l'équipement mobile est par exemple un téléphone mobile, et la carte à puce est par exemple une carte à puce MMC (Multi-Media Card), ou SD (Secure Digital) ou USB (Universal Serial Bus) ou UICC (Universal Integrated Circuit(s) Card), munie d'une application SIM (Subscriber Identity Module) lorsque le terminal accueillant la carte est un mobile relié à un réseau du type GSM/GPRS (Global System for Mobile communications / General Packet Radio Service), ou d'une application USIM (Universal Subscriber Identity Module), RUIM (Removable User Identity Module) ou ISIM (IP Subscriber Identity Module) ou EAP-SIM (Extensible Authentication Protocol), lorsque le terminal accueillant la carte est un mobile fonctionnant en accès multiple à répartition par codes CDMA de la troisième génération (3GPP) du type UMTS ou UTRAN, ou de la troisième génération (3GPP2) du type CDMA 2000.

Selon l'invention également, la carte à puce est associée audit équipement mobile lorsqu'une connexion électrique est réalisée entre la carte et le lecteur, par exemple lorsque carte est positionnée dans lecteur de carte lui-même ou sans connexion électrique, comme pour des cartes à puce sans contact ou hybride contact/sans contact.

Des données personnelles peuvent alors être synchronisées entre la carte UICC et le téléphone. Même si le téléphone est perdu ou endommagé, les données personnelles sont donc conservées dans la carte en l'état où elles se trouvaient dans le téléphone. La pérennité des données personnelles est donc assurée par l'invention, et ce sans utiliser d'infrastructure lourde.

Un client de synchronisation SyncML étant présent dans les équipements mobiles connus, l'invention évite donc de redévelopper un nouveau client de synchronisation au sein de l'équipement mobile.

Par ailleurs, à cause de la taille réduite et des capacités de communication et de calculs réduites d'une carte à puce, il est reconnu par l'homme du métier comme difficile de réaliser une synchronisation par le protocole SyncML à partir d'un serveur contenu dans une carte à puce. La présente invention surmonte toutefois ces difficultés.

Au contraire, comme il a été vu précédemment, l'homme du métier s'orientait vers d'autres solutions de synchronisation qui n'utilisent pas SyncML. Des programmes spécifiques étaient insérés dans la carte, ce qui nécessitait une modification de l'équipement mobile. La présente invention permet de vaincre ce préjugé.

Afin de permettre l'insertion du serveur de synchronisation SyncML dans la carte à puce, des modes de réalisations de l'invention concernent donc la façon dont le protocole SyncML est implémenté dans la carte.

D'abord, le protocole SyncML spécifie deux protocoles applicatifs, WBXML, ou XML. Or, l'utilisation de XML en tant que protocole applicatif requiert beaucoup de puissance de calcul, ce qui est incompatible avec l'implémentation du serveur de synchronisation SyncML dans une carte à puce selon l'invention. Ainsi, selon un mode de réalisation de l'invention, ledit serveur de synchronisation SyncML comprend un protocole applicatif WBXML.

Par ailleurs, afin de gérer de façon efficace les changements sur des données personnelles du serveur de synchronisation SyncML, selon un mode de réalisation de l'invention, ladite carte à puce comprend une mémoire persistante dans laquelle est stockée une base de données comprenant des données personnelles de serveur, et un gestionnaire d'événement comprenant des actions sur lesdits données personnelles, ladite étape dans laquelle ledit serveur de synchronisation SyncML synchronise lesdites données personnelles entre ladite carte à puce et ledit équipement mobile comprend des sous-étapes dans lesquelles :
o une données personnelle à actualiser est mise à jour par une action de mise à jour;
o ladite action de mise à jour est enregistrée dans ledit gestionnaire d'événement ;
et ledit procédé comprend des étapes dans lesquelles pour toute synchronisation postérieure audit enregistrement, ladite donnée personnelle est mise à jour par ladite action.

Ainsi, en gérant une liste d'actions pour tous les clients auquel le serveur se connecte ultérieurement au niveau d'un gestionnaire d'événements, il est possible d'économiser de l'espace mémoire. Ceci est en effet moins coûteux en mémoire que le fait de gérer une matrice contenant, pour chaque client, les actions spécifiques à réaliser.

Toujours dans ce mode de réalisation particulier de l'invention, ladite carte à puce est connectée à un premier équipement mobile comprenant un premier client de synchronisation SyncML;
- ledit premier client de synchronisation SyncML émet une requête de synchronisation à destination dudit serveur de synchronisation SyncML ;
- ledit serveur de synchronisation SyncML synchronise lesdites données personnelles entre ladite carte à puce et ledit premier équipement mobile, cette dernière étape comprenant des sous-étapes dans lesquelles :
   o une donnée personnelle à actualiser est mise à jour par une action ;
   o ladite action est enregistrée dans ledit gestionnaire d'événement ;
- ladite carte à puce est connectée à un deuxième équipement mobile comprenant un deuxième client de synchronisation SyncML;
- ledit deuxième client de synchronisation SyncML émet une requête de synchronisation à destination dudit serveur de synchronisation SyncML,
- ledit serveur de synchronisation SyncML transmet audit deuxième client de synchronisation SyncML ladite action pour actualiser ladite donnée personnelle à actualiser au niveau dudit deuxième équipement.

Afin de gérer la connexion à une pluralité d'équipements mobiles, dans le procédé susmentionné, chacun desdits au moins un équipement mobile est associé à une ancre, et ladite étape dans laquelle ledit serveur de synchronisation SyncML synchronise lesdites données personnelles entre ladite carte à puce et ledit équipement mobile comprend des sous-étapes dans lesquelles :
- ladite ancre est enregistrée dans une mémoire persistante de ladite carte à puce.

Dans le protocole SyncML, des identifiants locaux uniques, ou LUID pour « Locally Unique Identifiers » en langue anglaise correspondent à des nombres assignés par le client de synchronisation SyncML à une donnée personnelle d'une base de données locale au niveau de l'équipement mobile. Coté serveur, des identifiants globaux uniques, ou GUID pour « Globally Unique Identifiers » sont des identifiants assignés par le serveur à une donnée utilisée dans une base de donnée du serveur. Ces deux identifiants sont utilisées pour réaliser les synchronisations entre les données du client et les données du serveur. De façon connue en soi, le serveur crée une table de correspondance pour connaître le lien entre les LUID et les GUID.

Selon un mode de réalisation de l'invention, ledit procédé comprend des étapes dans lesquelles :
- ledit serveur stocke dans une mémoire persistante de ladite carte à puce, une première matrice comprenant l'identifiant GUID de chacune desdites données personnelles ;
- ledit serveur stocke dans une mémoire persistante de ladite carte à puce, une première matrice comprenant pour chacun des identifiants GUID de chacune desdites données personnelles, une liste des identifiants LUID de chacun desdits au moins un client de synchronisation SyncML.

Par ailleurs, le flux de données SyncML échangées entre le client et le serveur peut être important eu égard au canal de communication ainsi qu'à la taille mémoire de la carte à puce selon l'invention. En particulier, la taille des mémoires volatiles des cartes actuelles ne permet pas un stockage des paquets de données SyncML en mémoire volatile avant leur traitement. Pour pallier cet inconvénient, dans le procédé susmentionné, ladite étape dans laquelle ledit serveur de synchronisation SyncML synchronise lesdites données personnelles, comprend des sous-étapes dans lesquelles :
- ledit serveur reçoit un premier paquet de données de synchronisation ;
- ledit serveur stocke ledit premier paquet dans une première zone mémoire d'une mémoire persistante de ladite carte à puce ;
- ledit serveur reçoit un deuxième paquet de données de synchronisation ;
- ledit serveur stocke ledit deuxième paquet dans une deuxième zone mémoire de ladite mémoire persistante de ladite carte à puce.

De la sorte, les paquets de données, peuvent être exploitée par le serveur de synchronisation SyncML sans utilisation de la mémoire volatile de la carte à puce.

Afin de réaliser une synchronisation bilatérale entre le serveur de synchronisation SyncML et l'équipement mobile, ladite carte à puce comprend une mémoire persistante dans laquelle est stockée une base de données de serveur comprenant des données personnelles de serveur, et un gestionnaire d'événement comprenant des actions sur lesdits données personnelles, ladite étape dans laquelle ledit serveur de synchronisation SyncML synchronise lesdites données personnelles entre ladite carte à puce et ledit équipement mobile comprend des sous-étapes dans lesquelles :
- ledit client envoie audit serveur des mises à jour relatives à des données personnelles stockées dans ladite base de données de serveur ;
- ledit serveur transmet lesdites mises à jour à ladite base de données ;
- ladite base de données actualise lesdites données personnelles de serveur à l'aide desdites mises à jour ;
- ledit serveur recherche dans ledit gestionnaire d'événement des actions à mettre en oeuvre au niveau dudit équipement mobile ;
- ledit serveur transmet lesdites actions audit client.

L'invention concerne également une carte à puce comprenant au moins un bloc mémoire et un microprocesseur, caractérisé en ce que ledit bloc mémoire stocke un programme d'ordinateur, ledit programme étant agencé pour réaliser les fonctions d'un serveur SyncML lorsqu'il est exécuté à l'aide dudit microprocesseur.

L'invention concerne également un ensemble comprenant un équipement mobile et une carte à puce, ledit équipement mobile comprenant ou étant connecté à un client de synchronisation SyncML, ladite carte à puce étant associée audit équipement mobile, et comprenant au moins un bloc mémoire et un microprocesseur, caractérisé en ce que ladite mémoire stocke un programme d'ordinateur, ledit programme étant agencé pour réaliser les fonctions d'un serveur SyncML lorsqu'il est exécuté à l'aide dudit microprocesseur.

On décrit maintenant un mode de réalisation de l'invention en référence aux figures annexées dans lesquelles :
- FIG. 1 représente un ensemble comprenant un équipement mobile et une carte à puce selon un premier mode de réalisation de l'invention ;
- FIG. 2 représente un ensemble comprenant un équipement mobile et une carte à puce selon un deuxième mode de réalisation de l'invention
- FIG. 3 représente un schéma d'un premier mode de réalisation d'un procédé selon l'invention ;
- FIG. 4 représente un schéma d'un deuxième mode de réalisation d'un procédé selon l'invention ;
- FIG. 5 représente un schéma bloc d'un serveur SyncML stocké dans une carte à puce.

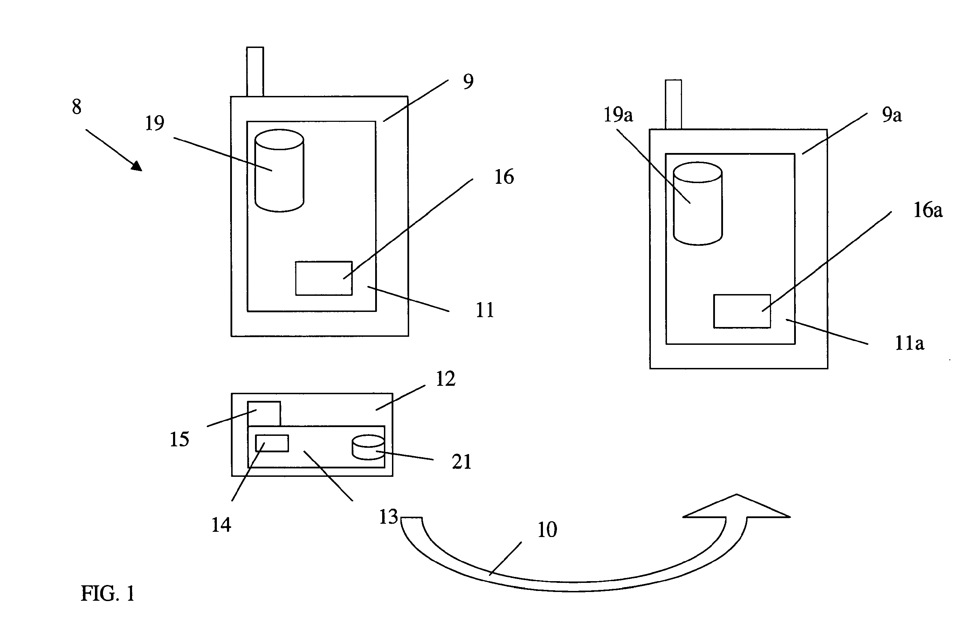

Illustré FIG. 1, un ensemble 8 selon l'invention comprend un équipement mobile 9. Cet équipement mobile 9 comprend des mémoires 11. Ces mémoires 11 comprennent un client SyncML 11, sous la forme d'un programme d'ordinateur, pouvant s'exécuter grâce à un processeur. Les mémoires 11 comprennent également une base de données personnelles d'équipement 19. L'équipement mobile 9 comprend également un système d'exploitation et des capacités d'échanges de données avec une carte à puce, sous la forme d'une interface TCP/IP, ou BIP TCP, ou SC-TP.

L'équipement mobile peut être par exemple un téléphone mobile ou un assistant personnel de type PDA.

L'ensemble 8 comprend également une carte à puce 12. Cette carte à puce comprend un microprocesseur 15, relié à des mémoires 13. Ces mémoires 13 comprennent un serveur SyncML 14, et une base de données personnelles de carte 21. Le serveur SyncML 14 est apte à permettre la synchronisation des données personnelles de carte avec les données personnelles d'équipement par échange avec le client SyncML 11 de l'équipement mobile 9 lorsque la carte à puce 12 est associée à l'équipement mobile 9, par exemple par contact électrique, lorsque la carte à puce 12 est insérée dans l'équipement mobile 9. Cette carte à puce 12 est par exemple une carte UICC 12. La carte 12 comprend un système d'exploitation et des interfaces d'échange de données, par exemple http, ou TCP. La carte 12 comprend un serveur http permettant de réaliser de tels échanges.

Une fois la connexion réalisée entre la carte 12 et l'équipement mobile, des données peuvent être échangées entre la carte 12 et l'équipement mobile 9.

Cet échange peut être soumis à une authentification grâce aux paramètres de sécurité de la carte, notamment un code PIN. Les synchronisations peuvent donc être refusées si les authentifications par code PIN du porteur de la carte 12 échouent.

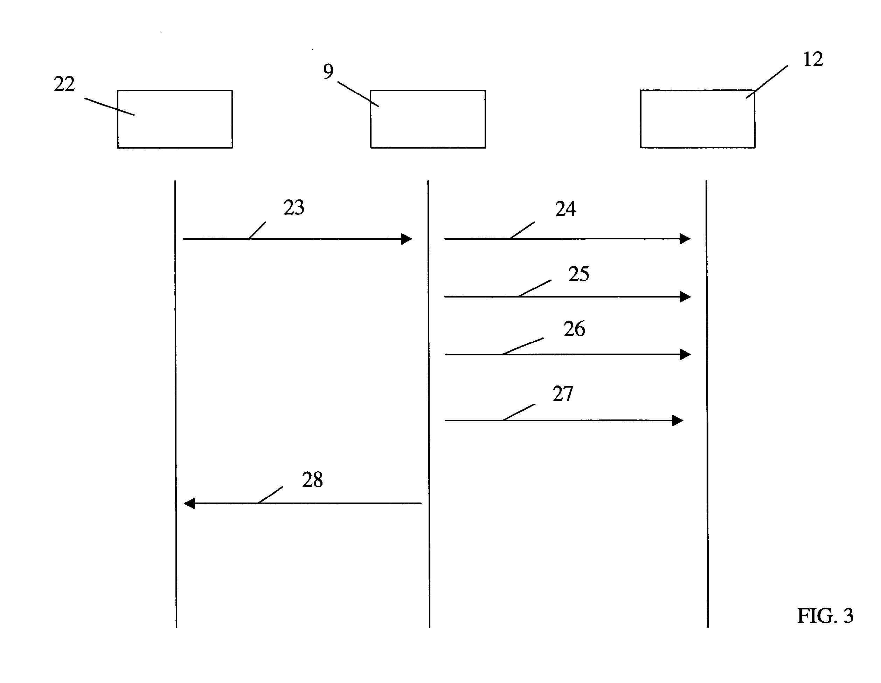

Dans un premier mode de réalisation du procédé de synchronisation selon invention, illustré FIG. 3 et FIG. 1, l'équipement mobile 9 est détenu par un utilisateur 22. L'utilisateur 22 configure le client SyncML 16 sur une URL correspondant au serveur SyncML 14 de la carte à puce 12. Cette URL est définie par une adresse locale et un port. L'utilisateur déclenche ensuite 23 une synchronisation des données entre l'équipement mobile 9 et la carte à puce 12. De la sorte, par échange de données selon le protocole SyncML, des données personnelles stockées dans une mémoire de l'équipement mobile 9 sont sauvegardées dans la carte à puce 12. Cette synchronisation comprend une phase d'initialisation 24, une phase d'authentification 25 de la carte 12, une phase de synchronisation 26 selon le protocole SyncML, et une phase de fin de la synchronisation 27. L'utilisateur est alors notifié 28, que la synchronisation a été réalisée.

Si l'utilisateur 22 change d'équipement mobile, et utilise un nouvel équipement mobile 9a comprenant également des mémoires 11 a comprenant un client SyncML 16a et les mêmes capacités d'échange de données que l'équipement mobile 9, il peut récupérer les données stockées dans la carte à puce 12 en insérant 10 cette carte 12 dans le nouvel équipement mobile 9a, et en relançant une nouvelle synchronisation selon le protocole SyncML. De la sorte, les données personnelles de la carte 12 peuvent être enregistrées dans un mémoire 11a du nouvel équipement 9a au niveau d'une base de données 19a.

Si l'équipement 9 est endommagé, ces données personnelles peuvent donc être récupérées au niveau du nouvel équipement 9a.

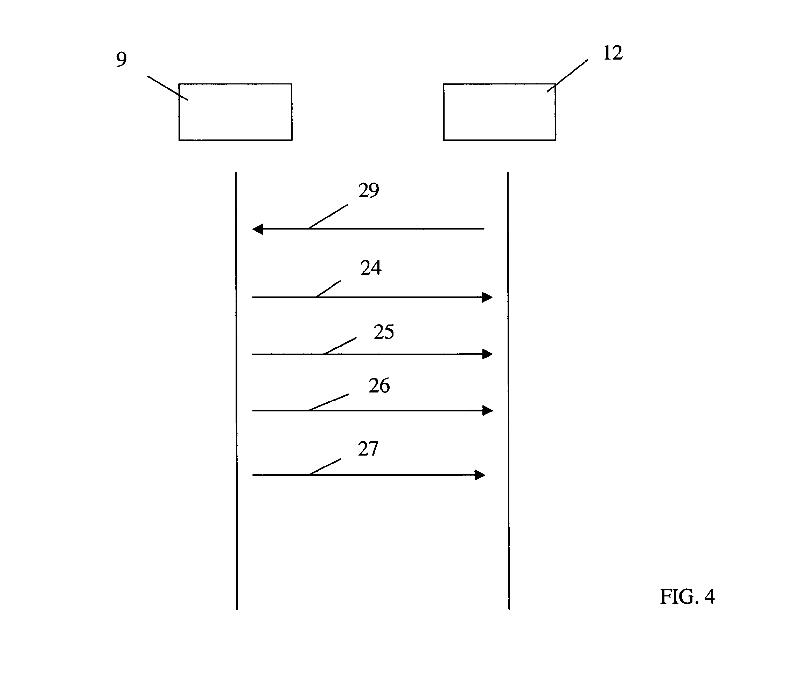

Selon un deuxième mode de réalisation du procédé de synchronisation selon invention, illustré FIG. 4, la synchronisation précédemment décrite entre le serveur SyncML 14 et le client SyncML 11 est réalisé automatiquement à intervalles réguliers, sans nécessiter d'intervention d'un utilisateur. Dans ce cas, le serveur SyncML 14 de la carte 12 émet 29 une requête vers le client SyncML 16 de l'équipement mobile 9 pour que le client SyncML 16 effectue une opération de synchronisation. Ceci est réalisé par une fonction d'alerte serveur, connue sous l'appellation anglaise SERVER-ALERT. Dans ce mode SERVER-ALERT, le serveur SyncML 14 de la carte 12 envoie 29 des alertes au client SyncML 16 de l'équipement mobile 9 pour qu'il lance une synchronisation des données par exemple tous les jours. La synchronisation est alors réalisée comme dans le mode de réalisation précédemment décrit par une initialisation 24, une authentification 25, une synchronisation des données 26, et une fin de synchronisation 27.

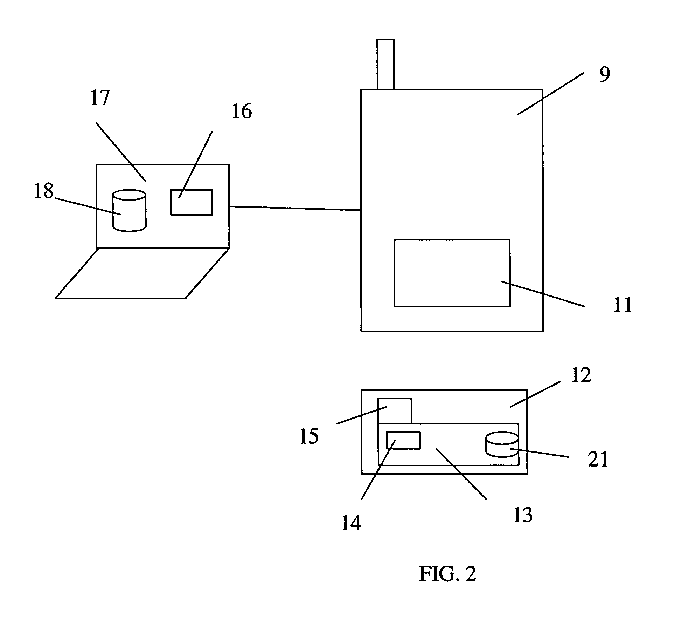

Selon un troisième mode de réalisation de l'invention illustré FIG. 2, la synchronisation telle que précédemment décrite est réalisée à partir d'un client SyncML 16 localisé sur un ordinateur personnel 17 connecté localement à l'équipement mobile 9, par exemple par un protocole Wi-Fi. L'ordinateur personnel comprend également une base de données personnelles 18. Une synchronisation entre les données de la carte 12 et les données de l'ordinateur personnel 17 peut alors être réalisé après que la carte 12 soit associée à l'équipement mobile 9. L'échange de données est par exemple d'abord réalisé de l'équipement personnel 17 vers l'équipement mobile 9 par le protocole Wi-Fi, puis de l'équipement mobile 9 vers la carte 12 par un protocole TCP. L'échange inverse est également réalisable pour actualiser les données de la base de données 18 avec les données de la carte 12. Le client SyncML 16 de l'ordinateur personnel 17 est par exemple un client SyncML d'un gestionnaire de contacts connu de type Outlook.

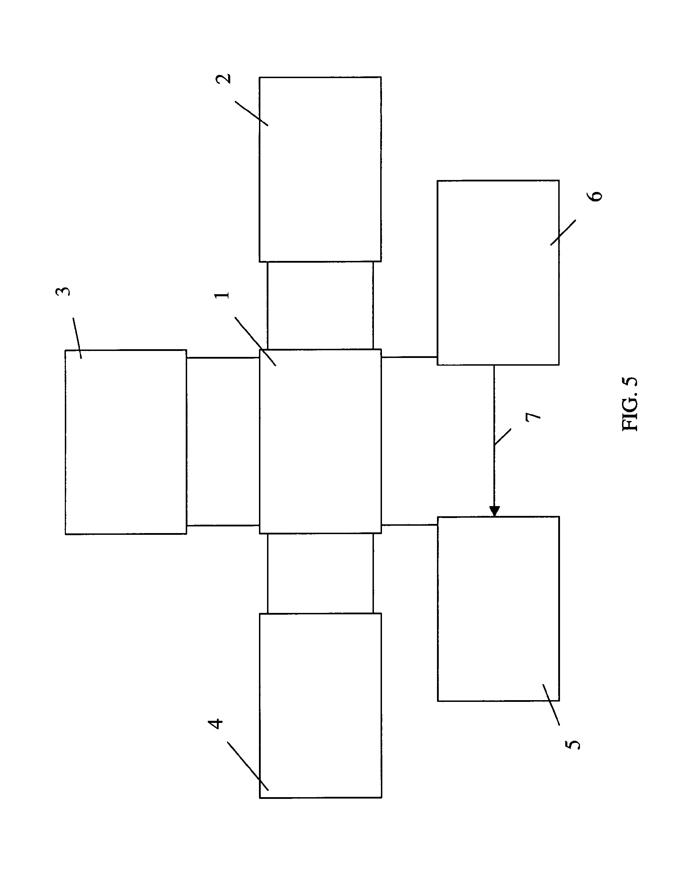

On décrit maintenant plus en détail le serveur SyncML 16 de la carte à puce 12 en référence à la FIG. 5.

Le serveur SyncML 16 est un programme informatique pouvant s'exécuter à l'aide du processeur 15. Les langages de programmation utilisés sont par exemple Javacard, avec des parties codées en langage C, essentiellement pour des raisons de performance et de flexibilité.

Le serveur SyncML 16 comprend un moteur de synchronisation 1, pouvant communiquer avec un serveur Web 3, avec un analyseur syntaxique du format WBXML 2, avec un encodeur au format WBXML 6, avec une base de données 4, et avec un gestionnaire d'événement 5. Le moteur de synchronisation 1 est par exemple écrit en langage Java.

On décrit maintenant plus en détail l'analyseur syntaxique du format WBXML 2. Ce module 2 est de préférence écrit en langage C, et il est appelé par le moteur de synchronisation 1. Le module 2 est apte à réaliser une analyse syntaxique de noeuds WBXML.

L'analyseur syntaxique 2 comprend notamment un bloc de code d'initialisation apte à réaliser les fonctions suivantes :
- initialisation de l'analyse syntaxique ;
- spécification d'un fichier où se trouve un paquet WBXML à analyser ;
- spécification d'un tableau dans lequel sont stockées différentes valeurs utiles à l'analyse syntaxique.

L'analyseur syntaxique 2 comprend également un bloc de code de recherche apte à réaliser une fonction de recherche de la valeur du prochain noeud WBXML à analyser.

L'analyseur syntaxique 2 comprend également un bloc de code d'analyse qui analyse l'arborescence du prochain noeud WBXML déterminé par le bloc de code de recherche, et qui stocke en mémoire les informations utiles issues de l'analyse.

L'analyseur syntaxique 2 comprend également un bloc de code de récupération qui récupère les données analysées par le bloc de code d'analyse.

Par ailleurs, le protocole SyncML définit un traitement des données volumineuses dans le chapitre relatif aux messages multiples dans un paquet et au traitement des objets volumineux, en langue anglaise « Multiple Messages & Large Object Handling ». Selon l'invention, la mémoire volatile de la carte à puce 12 n'est pas suffisante pour réaliser un traitement classique de ces messages multiples. On effectue donc un stockage temporaire en mémoire persistante de la carte des paquets WBXML avant le traitement par le module d'analyse syntaxique 2. Lorsqu'un paquet est traité, le paquet précédent est alors toujours stocké en mémoire temporaire. Ceci permet notamment de gérer les noeuds WBXML, lesquels ne sont pas ordonnés.

Le moteur de synchronisation 1 comprend un moteur de synchronisation SyncML ainsi que deux classes Java aptes à gérer le flux SyncML entrant et sortant du moteur de synchronisation 1.

Le moteur de synchronisation SyncML est une classe Java comprenant une méthode d'analyse syntaxique qui génère des réponses appropriées en fonction du protocole SyncML lorsque des noeuds sont analysés.

L'encodeur WBXML 4 a pour fonction de coder les données reçues par exemple d'un équipement mobile 9 au format WBXML de sorte à permettre une analyse ultérieure telle que précédemment décrite.

Le serveur Web 3 a pour fonction de permettre des échanges au format http vers et depuis le moteur de synchronisation 1 et vers et depuis l'équipement mobile 9.

La base de données 6 comprend les données personnelles de carte aptes à être synchronisées avec les données personnelles d'équipement mobile. Lorsqu'une donnée personnelle de la base de données 6 est mise à jour par une synchronisation SyncML, une notification 7 est transmise au gestionnaire d'événement 5, qui stocke l'action réalisée par la mise à jour.

Cette action peut être une modification d'une donnée personnelle, un ajout d'une donnée personnelle, ou une suppression d'une donnée personnelle.

Suite à cette synchronisation, lorsque la donnée personnelle doit être mise à jour dans un nouvel équipement mobile 9a, comprenant un nouveau client SyncML 16a, la mise à jour est réalisée grâce à l'action stockée dans le gestionnaire d'événement 5 de la carte à puce 12.

Le stockage en mémoire persistante des actions sur les différentes données personnelles permet donc un gain de place mémoire adapté à la mise en oeuvre du serveur SyncML 14 dans une carte à puce 12.

De la même façon, l'ancre, telle que définie dans le protocole SyncML, associée à chaque client, est gardée en mémoire persistante de la carte lors de chaque synchronisation.

Les informations GUID et LUID des données personnelles sont également stockées en mémoire persistante sous la forme de deux matrices, l'une comprenant le GUID associé à une référence interne sur la donnée personnelle, l'autre contenant, pour chaque GUID, la liste des LUID client.

## Revendications

1. Procédé pour synchroniser des données personnelles entre une mémoire (11) d'au moins un équipement mobile (9, 9a) et un dispositif externe (12), chacun desdits au moins un équipement mobile (9,9a) comprenant ou étant connecté à un client de synchronisation SyncML (16), ledit dispositif externe comprenant un serveur de synchronisation SyncML (14) associé audit client de synchronisation SyncML, **caractérisé en ce que** ledit dispositif externe (12) est une carte à puce (12), et **en ce que** ledit procédé comprend des étapes dans lesquelles :
- ladite carte à puce (12) est associée audit équipement mobile;
- ledit client de synchronisation SyncML (16) émet (24) une requête de synchronisation à destination dudit serveur de synchronisation SyncML (14);
- ledit serveur de synchronisation SyncML synchronise (26) lesdites données personnelles entre ladite carte à puce et ledit équipement mobile.

2. Procédé selon la revendication 1 dans lequel ledit serveur de synchronisation SyncML comprend un protocole applicatif WBXML.

3. Procédé selon l'une des revendications précédentes dans lequel ladite carte à puce comprend une mémoire persistante dans laquelle est stockée une base de données comprenant des données personnelles de serveur, et un gestionnaire d'événement comprenant des actions sur lesdits données personnelles, ladite étape dans laquelle ledit serveur de synchronisation SyncML synchronise lesdites données personnelles entre ladite carte à puce et ledit équipement mobile comprend des sous-étapes dans lesquelles :
o une données personnelle à actualiser est mise à jour par une action ;
o ladite action est enregistrée dans ledit gestionnaire d'événement ;
et ledit procédé comprend des étapes dans lesquelles pour toute synchronisation postérieure audit enregistrement, ladite donnée personnelle est mise à jour par ladite action.

4. Procédé selon la revendication 3 dans lequel ladite carte à puce est connectée à un premier équipement mobile comprenant un premier client de synchronisation SyncML;
- ledit premier client de synchronisation SyncML émet une requête de synchronisation à destination dudit serveur de synchronisation SyncML ;
- ledit serveur de synchronisation SyncML synchronise lesdites données personnelles entre ladite carte à puce et ledit premier équipement mobile, cette dernière étape comprenant des sous-étapes dans lesquelles :
o une donnée personnelle à actualiser est mise à jour par une action ;
o ladite action est enregistrée dans ledit gestionnaire d'événement ;
- ladite carte à puce est connectée à un deuxième équipement mobile comprenant un deuxième client de synchronisation SyncML;
- ledit deuxième client de synchronisation SyncML émet une requête de synchronisation à destination dudit serveur de synchronisation SyncML ;
- ledit serveur de synchronisation SyncML transmet audit deuxième client de synchronisation SyncML ladite action pour actualiser ladite donnée personnelle à actualiser au niveau dudit deuxième équipement.

5. Procédé selon l'une quelconque des revendications précédentes dans lequel chacun desdits au moins un équipement mobile est associé à une ancre, et ladite étape dans laquelle ledit serveur de synchronisation SyncML synchronise lesdites données personnelles entre ladite carte à puce et ledit équipement mobile comprend des sous-étapes dans lesquelles :
- ladite ancre est enregistrée dans une mémoire persistante de ladite carte à puce.

6. Procédé selon l'une quelconque des revendications précédentes dans lequel:
- ledit serveur de synchronisation SyncML stocke dans une mémoire persistante de ladite carte à puce, une première matrice comprenant un identifiant GUID de chacune desdites données personnelles ;
- ledit serveur stocke dans une mémoire persistante de ladite carte à puce, une première matrice comprenant pour chacun des identifiants GUID de chacune desdites données personnelles, une liste des identifiants LUID de chacun desdits au moins un client de synchronisation SyncML.

7. Procédé selon l'une quelconque des revendications précédentes dans lequel ladite étape dans laquelle ledit serveur de synchronisation SyncML synchronise lesdites données personnelles entre ladite carte à puce et ledit équipement mobile comprend des sous-étapes dans lesquelles :
- ledit serveur reçoit un premier paquet de données de synchronisation ;
- ledit serveur stocke ledit premier paquet dans une première zone mémoire d'une mémoire persistante de ladite carte à puce ;
- ledit serveur reçoit un deuxième paquet de données de synchronisation ;
- ledit serveur stocke ledit deuxième paquet dans une deuxième zone mémoire de ladite mémoire persistante de ladite carte à puce.

8. Procédé selon l'une quelconque des revendications précédentes dans lequel ladite carte à puce comprend une mémoire persistante dans laquelle est stockée une base de données de serveur comprenant des données personnelles de serveur, et un gestionnaire d'événement comprenant des actions sur lesdits données personnelles, ladite étape dans laquelle ledit serveur de synchronisation SyncML synchronise lesdites données personnelles entre ladite carte à puce et ledit équipement mobile comprend des sous-étapes dans lesquelles :
- ledit client envoie audit serveur des mises à jour relatives à des données personnelles stockées dans ladite base de données de serveur ;
- ledit serveur transmet lesdites mises à jour à ladite base de données ;
- ladite base de données actualise lesdites données personnelles de serveur à l'aide desdites mises à jour ;
- ledit serveur recherche dans ledit gestionnaire d'événement des actions à mettre en oeuvre au niveau dudit équipement mobile ;
- ledit serveur transmet lesdites actions audit client.

9. Carte à puce (12) comprenant au moins un bloc mémoire (13) et un microprocesseur (15), **caractérisé en ce que** ledit bloc mémoire stocke un programme d'ordinateur, ledit programme étant agencé pour réaliser les fonctions d'un serveur SyncML lorsqu'il est exécuté à l'aide dudit microprocesseur.

10. Ensemble (8) comprenant un équipement mobile (9, 9a) et une carte à puce (12), ledit équipement mobile comprenant ou étant connecté à un client de synchronisation SyncML, ladite carte à puce étant associée audit équipement mobile, et comprenant au moins un bloc mémoire et un microprocesseur, **caractérisé en ce que** ladite mémoire stocke un programme d'ordinateur, ledit programme étant agencé pour réaliser les fonctions d'un serveur SyncML lorsqu'il est exécuté à l'aide dudit microprocesseur.
